# EUROPEAN PATENT APPLICATION

(11) **EP 3 352 048 A1**
(43) Date of publication of application: **25.07.2018**
(21) Application number: 16845515.2
(22) Date of filing: 21.04.2016
(51) Int. Cl.: G06F 1/32

(54) **MOBILE TERMINAL AND WORKING METHOD THEREOF**

(30) Priority: 18.09.2015 CN 201510601377
(71) Applicant: ZTE Corporation, Shenzhen, Guangdong 518057 (CN)
(72) Inventor: ZHAO, Bo, Shenzhen Guangdong 518057 (CN)
(74) Representative: Novagraaf Technologies
(86) International application number: PCT/CN2016/079903
(87) International publication number: WO 2017/045401

(57) **Abstract**

Provided are a mobile terminal and a working method thereof. The present disclosure falls within the field of mobile terminals. The working method of the mobile terminal includes: a scenario recognition step of recognizing a working scenario of a mobile terminal when an application of the mobile terminal is started (scenario recognition step 101); a processing step of determining a screen resolution matching the working scenario of the mobile terminal (processing step 102); and a resolution control step of adjusting a screen resolution of the mobile terminal to the screen resolution determined in the processing step (resolution control step 103). By means of the method, a screen resolution of a mobile terminal can be dynamically adjusted according to a working scenario of the mobile terminal, thereby greatly improving the battery life of the mobile terminal without greatly affecting actual user experience.

## Description

### Technical Field

The present disclosure relates to the field of mobile terminals, and more particularly to a mobile terminal and a working method thereof.

### Background

At present, mobile terminal devices are widely used by public. However, because a development progress of matching battery technologies is slow, the problem of battery life has become a serious problem affecting user experience, and has also become a focus of mobile terminal manufacturers and platform manufacturers. According to the existing experience, it can be discovered that the most power-consuming accessory among all accessories of a mobile terminal is a screen of the mobile terminal. In addition, an excess display quality of the screen may be a waste for most of using scenarios of the mobile terminal. Therefore, the resolution of a mobile terminal screen is converted from 1080P to 720P forcibly by some manufacturers currently, so as to achieve the aim of saving power consumption. However, such a solution may affect user experience.

### Summary

Some embodiments of the present disclosure provide of a mobile terminal and a working method thereof, which may be capable of dynamically adjusting a screen resolution of a mobile terminal according to a working scenario of the mobile terminal, thereby greatly improving the battery life of the mobile terminal without greatly affecting actual user experience.

To solve the above-mentioned technical problem, the embodiments of the present disclosure provide the technical solution as follows.

According to one embodiment, a working method of a mobile terminal is provided. The method includes:
a scenario recognition step of recognizing a working scenario of a mobile terminal when an application of the mobile terminal is started;
a processing step of determining a screen resolution matching the working scenario of the mobile terminal; and
a resolution control step of adjusting a screen resolution of the mobile terminal to the screen resolution determined in the processing step.

In an exemplary embodiment, after the resolution control step, the method may further include:
a display step of conducting displaying based on the adjusted screen resolution.

In an exemplary embodiment, before the scenario recognition step, the method may further include:
an application scenario classification preset step of setting a first corresponding relationship between an application of the mobile terminal and a working scenario of the mobile terminal.

The scenario recognition step may include:
searching, after recognizing the application of the mobile terminal, the first corresponding relationship to determine the working scenario corresponding to the application of the mobile terminal based on the first corresponding relationship between the application of the mobile terminal and the working scenario of the mobile terminal.

In an exemplary embodiment, the scenario recognition step may further include:
when the working scenario corresponding to the application of the mobile terminal is not found in the first corresponding relationship, determining the working scenario corresponding to the application of the mobile terminal according to system resources occupied by the application of the mobile terminal.

In an exemplary embodiment, before the processing step, the method may further include:
a setting step of setting a second corresponding relationship between a working scenario of the mobile terminal and a screen resolution of the mobile terminal.

The processing step may include:
searching, after recognizing the working scenario of the mobile terminal, the second corresponding relationship to determine the screen resolution corresponding to the working scenario of the mobile terminal based on the second corresponding relationship between the working scenario of the mobile terminal and the screen resolution of the mobile terminal.

Another embodiment of the present disclosure provides a mobile terminal, including:
a scenario recognition module, configured to recognize a working scenario of the mobile terminal when an application of the mobile terminal is started;
a processing module, configured to determine a screen resolution matching the working scenario of the mobile terminal; and
a resolution control module, configured to adjust a screen resolution of the mobile terminal to the screen resolution determined by the processing module.

In an exemplary embodiment, the mobile terminal may further include:
a display module, configured to conduct displaying based on the adjusted screen resolution.

In an exemplary embodiment, the scenario recognition module may further include:
an application scenario classification preset sub-module, configured to set a first corresponding relationship between an application of the mobile terminal and a working scenario of the mobile terminal; and
a first recognition sub-module, configured to search, after recognizing the application of the mobile terminal, the first corresponding relationship to determine the working scenario corresponding to the application of the mobile terminal based on the first corresponding relationship between the application of the mobile terminal and the working scenario of the mobile terminal.

In an exemplary embodiment, the scenario recognition module may further include:
a second recognition sub-module, configured to determine, when the working scenario corresponding to the application of the mobile terminal is not found in the first corresponding relationship, the working scenario corresponding to the application of the mobile terminal according to system resources occupied by the application of the mobile terminal.

In an exemplary embodiment, the mobile terminal may further include:
a setting module, configured to set a second corresponding relationship between a working scenario of the mobile terminal and a screen resolution of the mobile terminal.

The processing module may be configured to:
search, after recognizing the working scenario of the mobile terminal, the second corresponding relationship to determine the screen resolution corresponding to the working scenario of the mobile terminal based on the second corresponding relationship between the working scenario of the mobile terminal and the screen resolution of the mobile terminal.

Another embodiment of the present disclosure provides a computer storage medium. The computer storage medium stores an execution instruction. The execution instruction may be used for executing the method in the above-mentioned embodiment.

Some embodiments of the present disclosure have the following beneficial effects.

In the above-mentioned solution, when an application of a mobile terminal is started, a working scenario of the mobile terminal is recognized, a screen resolution matching the working scenario of the mobile terminal is determined, and displaying is conducted based on the determined screen resolution. By means of the solution in some embodiments of the present disclosure, a screen resolution of a mobile terminal can be dynamically adjusted according to a working scenario of the mobile terminal, thereby greatly improving the battery life of the mobile terminal without greatly affecting actual user experience.

### Brief Description of the Drawings

Fig. 1 is a flowchart of a working method of a mobile terminal according to an embodiment of the present disclosure;
Fig. 2 is a structure diagram of a mobile terminal according to an embodiment of the present disclosure; and
Fig. 3 is a schematic diagram of N resolution channels preset by a resolution control module according to an embodiment of the present disclosure.

### Detailed Description of the Embodiments

In order to make technical problems to be solved by the embodiments of the present disclosure, technical solutions and advantages clearer, drawings and specific embodiments will be combined for detailed description below.

In view of that the battery life becomes a serious problem affecting user experience in related technologies, the embodiments of the present disclosure provide a mobile terminal and a working method thereof. The mobile terminal and the working method of the mobile terminal are capable of dynamically adjusting a screen resolution of a mobile terminal according to a working scenario of the mobile terminal, thereby greatly improving the battery life of the mobile terminal without greatly affecting actual user experience.

### First embodiment

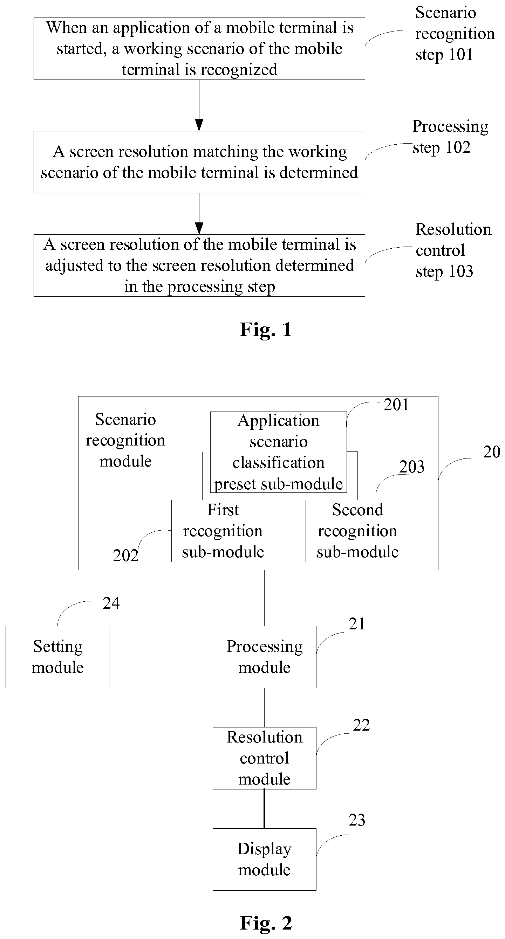

The present embodiment provides a working method of a mobile terminal. As shown in Fig. 1, the method of the present embodiment includes:
a scenario recognition step 101 of recognizing a working scenario of a mobile terminal when an application of the mobile terminal is started;
a processing step 102 of determining a screen resolution matching the working scenario of the mobile terminal; and
a resolution control step 103 of adjusting a screen resolution of the mobile terminal to the screen resolution determined in the processing step.

In the present embodiment, when an application of a mobile terminal is started, a working scenario of the mobile terminal is recognized, a screen resolution matching the working scenario of the mobile terminal is determined, and displaying is conducted based on the determined screen resolution. By means of the method of the embodiment of the present disclosure, a screen resolution of a mobile terminal can be dynamically adjusted according to a working scenario of the mobile terminal, thereby greatly improving the battery life of the mobile terminal without greatly affecting actual user experience.

In an exemplary embodiment, after the resolution control step, the method may further include:
a display step of conducting displaying based on the adjusted screen resolution.

In an exemplary embodiment, before the scenario recognition step, the method may further include:
an application scenario classification preset step of setting a first corresponding relationship between an application of the mobile terminal and a working scenario of the mobile terminal.

The scenario recognition step may include:
searching, after recognizing the application of the mobile terminal, the first corresponding relationship to determine the working scenario corresponding to the application of the mobile terminal based on the first corresponding relationship between the application of the mobile terminal and the working scenario of the mobile terminal.

In an exemplary embodiment, the scenario recognition step may further include:
when the working scenario corresponding to the application of the mobile terminal is not found in the first corresponding relationship, determining the working scenario corresponding to the application of the mobile terminal according to system resources occupied by the application of the mobile terminal.

In an exemplary embodiment, before the processing step, the method may further include:
a setting step of setting a second corresponding relationship between a working scenario of the mobile terminal and a screen resolution of the mobile terminal.

The processing step may include:
searching, after recognizing the working scenario of the mobile terminal, the second corresponding relationship to determine the screen resolution corresponding to the working scenario of the mobile terminal based on the second corresponding relationship between the working scenario of the mobile terminal and the screen resolution of the mobile terminal.

### Second embodiment

The present embodiment provides a mobile terminal. As shown in Fig. 2, the present embodiment includes:
a scenario recognition module 20, configured to recognize a working scenario of the mobile terminal when an application of the mobile terminal is started;
a processing module 21, configured to determine a screen resolution matching the working scenario of the mobile terminal; and
a resolution control module 22, configured to adjust a screen resolution of the mobile terminal to the screen resolution determined by the processing module.

In an exemplary embodiment, the mobile terminal may further include:
a display module 23, configured to conduct displaying based on the adjusted screen resolution.

In an exemplary embodiment, the scenario recognition module 20 may further include:
an application scenario classification preset sub-module 201, configured to set a first corresponding relationship between an application of the mobile terminal and a working scenario of the mobile terminal; and
a first recognition sub-module 202, configured to search, after recognizing the application of the mobile terminal, the first corresponding relationship to determine the working scenario corresponding to the application of the mobile terminal based on the first corresponding relationship between the application of the mobile terminal and the working scenario of the mobile terminal.

In an exemplary embodiment, the scenario recognition module may further include:
a second recognition sub-module 203, configured to determine, when the working scenario corresponding to the application of the mobile terminal is not found in the first corresponding relationship, the working scenario corresponding to the application of the mobile terminal according to system resources occupied by the application of the mobile terminal.

In an exemplary embodiment, the mobile terminal may further include:
a setting module 24, configured to set a second corresponding relationship between a working scenario of the mobile terminal and a screen resolution of the mobile terminal.

The processing module 21 may be configured to:
search, after recognizing the working scenario of the mobile terminal, the second corresponding relationship to determine the screen resolution corresponding to the working scenario of the mobile terminal based on the second corresponding relationship between the working scenario of the mobile terminal and the screen resolution of the mobile terminal.

In the present embodiment, when an application of a mobile terminal is started, a working scenario of the mobile terminal is recognized, a screen resolution matching the working scenario of the mobile terminal is determined, and displaying is conducted based on the determined screen resolution. By means of the embodiment of the present disclosure, a screen resolution of a mobile terminal can be dynamically adjusted according to a working scenario of the mobile terminal, thereby greatly improving the battery life of the mobile terminal without greatly affecting actual user experience.

### Third embodiment

A mobile terminal in the present embodiment includes a scenario recognition module, a processing module, a resolution control module, a display module and a setting module. The scenario recognition module may include an application scenario classification preset sub-module. The application scenario classification preset sub-module may preset several working scenarios which are used by a user daily and which may basically cover mobile terminal applications frequently used by the user, such as game, video and reading. The application scenario classification preset sub-module may set working scenarios corresponding to applications frequently used by a user daily. Thus, when a certain application is started, a first recognition sub-module can determine the working scenario to which the current application pertains. In addition, a second recognition sub-module may allocate specific working scenarios to other applications not covered by the application scenario classification preset sub-module according to an actual usage situation of the applications such as a usage situation of a Graphic Processing Unit (GPU) and an image refresh frequency of a screen, and add the working scenarios to a list of the application scenario classification preset sub-module. When a certain application is started, the scenario recognition module can find a corresponding working scenario, and send working scenario information to the processing module. The processing module determines a screen resolution matching the working scenario of the mobile terminal, and sends the determined screen resolution to the resolution control module.

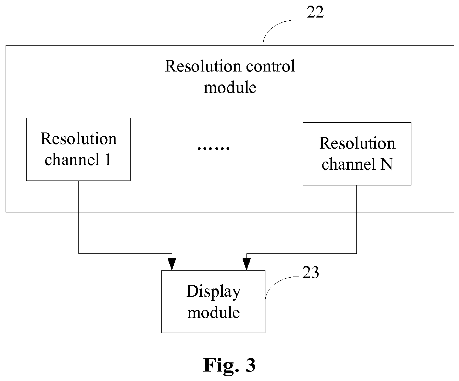

As shown in Fig. 3, the resolution control module of the present embodiment may preset N resolution channels, each channel representing a screen solution grade. After the resolution control module receives the screen resolution sent by the processing module, a corresponding resolution channel is selected to conduct displaying.

A working method of a mobile terminal of the present embodiment may include six steps as follows.

In the first step, working scenario classes are preset according to an actual using situation of a user, and a screen resolution corresponding to each working scenario is preset.

In the second step, a preset list recording working scenarios corresponding to applications frequently used on the market is preset according to using situations of the applications, and correspondingly, a screen resolution selected when each application is started can be specified.

In the third step, a working scenario corresponding to an application not included in the preset list is judged according to system resource occupation of the application in the mobile terminal during actual user operation, such as a usage situation of a GPU and an image refresh frequency of a screen, and the application can be added to the preset list.

In the fourth step, a resolution control module presets N resolution channels representing N screen resolutions respectively. A screen resolution corresponding to a preset working scenario comes from the N screen resolutions and is not suggested to go beyond the scope of the N resolution channels.

In the fifth step, when a certain application is started, a corresponding working scenario is recognized and determined, and then is transferred to a processing module. The processing module sends a corresponding screen resolution to the resolution control module. The resolution control module selects a resolution channel corresponding to the working scenario.

In the sixth step, image displaying is completed.

In the present embodiment, when an application of a mobile terminal is started, a working scenario of the mobile terminal is recognized, a screen resolution matching the working scenario of the mobile terminal is determined, and displaying is conducted based on the determined screen resolution. By means of the solution in the embodiment of the present disclosure, a screen resolution of a mobile terminal can be dynamically adjusted according to a working scenario of the mobile terminal, thereby greatly improving the battery life of the mobile terminal without greatly affecting actual user experience.

Another embodiment of the present disclosure provides a storage medium. In the exemplary embodiment, the storage medium stores an execution instruction. The execution instruction is used for executing the above-mentioned method.

In an exemplary embodiment, the above-mentioned storage medium may include, but not limited to, various media capable of storing program codes, such as a U disk, a Read Only Memory (ROM), a Random Access Memory (RAM), a mobile hard disk, a magnetic disk or an optical disk.

Many functional parts described in the specification are referred to as modules to more specifically emphasize independency of an implementation manner.

In the embodiment of the present disclosure, the modules may be implemented by software to be executed by various types of processors. For example, an identified executable code module may include one or more physical or logic block of a computer instruction. For example, the identified executable code module may be constructed as an object, a process or a function. In spite of this, it is unnecessary to physically locate executable codes of various identified modules together, and different instructions may be stored on different physical modules. When these instructions are logically combined, a module may be constructed, and a specified aim of the module can be achieved.

The executable code module may be a single instruction or many instructions, and may be even distributed on multiple different code segments, distributed in different programs and distributed across multiple memory devices. Likewise, operation data may be recognized within a module, and may be implemented in any appropriate form and organized within any appropriate type of data structure. The operation data may be collected as a single data set, or may be distributed at different locations (different storage devices), and may be at least partially present on a system or network by serving as an electronic signal.

When a module may be implemented by using software, in view of the level of an existing hardware process, those skilled in the art may construct a corresponding hardware circuit to implement functions corresponding to the module that can be implemented by software without consideration of cost. The hardware circuit includes a conventional Very-Large-Scale Integrated (VLSI) circuit or gate array and an existing semiconductor such as a logic chip and a transistor or other discrete components. The module may also be implemented by using a programmable hardware device such as a field programmable gate array, programmable array logics and a programmable logic device.

In each method embodiment of the present disclosure, the serial number of each step cannot be used to limit the sequence of all the steps. As will occur to those of ordinary skill in the art, making any change to the sequence of the steps is also within the scope of protection of the present disclosure without making creative work.

The above is preferable implementation manners of the present disclosure. Those of ordinary skill in the art can also make some improvements and modifications without departing from the principle of the present disclosure. These improvements and modifications should fall within the scope of protection of the present disclosure.

### Industrial Applicability

As above, the mobile terminal and the working method thereof provided in some embodiments of the present disclosure have the following beneficial effects. When an application of a mobile terminal is started, a working scenario of the mobile terminal is recognized, a screen resolution matching the working scenario of the mobile terminal is determined, and displaying is conducted based on the determined screen resolution. By means of the solution in some embodiments of the present disclosure, a screen resolution of a mobile terminal can be dynamically adjusted according to a working scenario of the mobile terminal, thereby greatly improving the battery life of the mobile terminal without greatly affecting actual user experience.

## Claims

1. A working method of a mobile terminal, comprising:
a scenario recognition step of recognizing a working scenario of a mobile terminal when an application of the mobile terminal is started;
a processing step of determining a screen resolution matching the working scenario of the mobile terminal; and
a resolution control step of adjusting a screen resolution of the mobile terminal to the screen resolution determined in the processing step.

2. The working method of the mobile terminal as claimed in claim 1, wherein after the resolution control step, the method further comprises:
a display step of conducting displaying based on the adjusted screen resolution.

3. The working method of the mobile terminal as claimed in claim 1, wherein before the scenario recognition step, the method further comprises:
an application scenario classification preset step of setting a first corresponding relationship between an application of the mobile terminal and a working scenario of the mobile terminal; and
the scenario recognition step comprises:
searching, after recognizing the application of the mobile terminal, the first corresponding relationship to determine the working scenario corresponding to the application of the mobile terminal based on the first corresponding relationship between the application of the mobile terminal and the working scenario of the mobile terminal.

4. The working method of the mobile terminal as claimed in claim 3, wherein the scenario recognition step further comprises:
when the working scenario corresponding to the application of the mobile terminal is not found in the first corresponding relationship, determining the working scenario corresponding to the application of the mobile terminal according to system resources occupied by the application of the mobile terminal.

5. The working method of the mobile terminal as claimed in claim 3, wherein before the processing step, the method further comprises:
a setting step of setting a second corresponding relationship between a working scenario of the mobile terminal and a screen resolution of the mobile terminal; and
the processing step comprises:
searching after recognizing the working scenario of the mobile terminal, the second corresponding relationship to determine the screen resolution corresponding to the working scenario of the mobile terminal based on the second corresponding relationship between the working scenario of the mobile terminal and the screen resolution of the mobile terminal.

6. A mobile terminal, comprising:
a scenario recognition module, configured to recognize a working scenario of the mobile terminal when an application of the mobile terminal is started;
a processing module, configured to determine a screen resolution matching the working scenario of the mobile terminal; and
a resolution control module, configured to adjust a screen resolution of the mobile terminal to the screen resolution determined by the processing module.

7. The mobile terminal as claimed in claim 6, further comprising:
a display module, configured to conduct displaying based on the adjusted screen resolution.

8. The mobile terminal as claimed in claim 6, wherein the scenario recognition module comprises:
an application scenario classification preset sub-module, configured to set a first corresponding relationship between an application of the mobile terminal and a working scenario of the mobile terminal; and
a first recognition sub-module, configured to search, after recognizing the application of the mobile terminal, the first corresponding relationship to determine the working scenario corresponding to the application of the mobile terminal based on the first corresponding relationship between the application of the mobile terminal and the working scenario of the mobile terminal.

9. The mobile terminal as claimed in claim 8, wherein the scenario recognition module further comprises:
a second recognition sub-module, configured to determine, when the working scenario corresponding to the application of the mobile terminal is not found in the first corresponding relationship, the working scenario corresponding to the application of the mobile terminal according to system resources occupied by the application of the mobile terminal.

10. The mobile terminal as claimed in claim 8, further comprising:
a setting module, configured to set a second corresponding relationship between a working scenario of the mobile terminal and a screen resolution of the mobile terminal, wherein
the processing module is configured to:
search, after recognizing the working scenario of the mobile terminal, the second corresponding relationship to determine the screen resolution corresponding to the working scenario of the mobile terminal based on the second corresponding relationship between the working scenario of the mobile terminal and the screen resolution of the mobile terminal.
